# EUROPÄISCHE PATENTSCHRIFT

(11) **EP 1 135 293 B1**
(45) Veröffentlichungstag und Bekanntmachung des Hinweises auf die Patenterteilung: **23.07.2003**
(21) Anmeldenummer: 99962106.3
(22) Anmeldetag: 26.11.1999
(51) Int. Cl.: B65B 1/34, G01G 13/04, G01G 13/24

(54) **VERFAHREN UND VORRICHTUNG ZUR BEFÜLLUNG VON GEBINDEN**
METHOD AND DEVICE FOR FILLING CONTAINERS
PROCEDE ET DISPOSITIF POUR REMPLIR DES FUTS

(30) Priorität: 01.12.1998 DE 19855377
(43) Veröffentlichungstag der Anmeldung: 26.09.2001
(73) Patentinhaber: Chronos Holding Ltd, Nottingham NG5 5HD (GB)
(72) Erfinder: SCHWENKE, Dieter, D-25560 Schenefeld (DE); OSTER, Robert, D-53332 Bornheim (DE)
(74) Vertreter: Brandenburg, Thomas, Dr.
(86) Internationale Anmeldenummer: DE9903792
(87) Internationale Veröffentlichungsnummer: WO00032473

(56) Entgegenhaltungen:
- DE-A- 3 708 078
- GB-A- 2 310 729

## Beschreibung

Die Erfindung betrifft ein Verfahren zum Befüllen von Gebinden, insbesondere Säcken, in einer Füllstation mit Schüttgut, von dem eine erste Menge im Grobstrom und eine zweite Menge im Feinstrom in das Gebinde eingebracht werden, um zusammen das Füllgewicht zu ergeben. Die Erfindung betrifft ferner eine Vorrichtung zur Befüllung von Gebinden, insbesondere Säcken, mit Schüttgut, mit einer Füllstation, der ein erstes Mengenmeßgerät und ein erster Behälter zugeordnet sind, an dessen Auslauf ein Füllstutzen angeschlossen ist.

Solche Verfahren sind z.B. aus den Dokumenten DE-A-3708078 oder GB-A-2310729 bekonnt.

Es ist bekannt, einen Sack an einer Füllstation nacheinander mit einer größeren Schüttgutmenge im Grobstrom und dann mit einer kleinen Restmenge im Feinstrom zu befüllen, um die Zeit für den Füllvorgang möglichst gering zu halten und das Sollgewicht in dem Sack möglichst genau zu erreichen. Grob- und Feinstrom kommen aus dem gleichen Schüttgutbehälter. Die Umschaltung von Grob- auf Feinstrom erfolgt durch teilweises Zufahren eines Drosselorgans. Zur Beendigung des Feinstroms wird das gleiche Drosselorgan gänzlich geschlossen. Diese Art der Befüllung ist nicht optimal, weil Grobund Feinstrom bei laufender Wägung aufeinanderfolgen und die Umschaltung durch das Erreichen eines vorgegebenen Teilgewichts im Sack ausgelöst wird. Wenn die Befüllung mit Grobstrom bei eingeschalteter Waage erfolgt, kann diese zu Schwingungen angeregt werden, die eine genaue Feststellung des erreichten Sollgewichts beeinträchtigen. Oftmals ist auch das Drosselorgan selbst Ursache dafür, daß die Befüllungszeit bei Einhaltung der gewünschten Genauigkeit des Füllgewichts nicht ausreichend minimiert werden kann.

Der vorliegenden Erfindung liegt die Aufgabe zugrunde, ein Verfahren und eine Vorrichtung zum Befüllen von Gebinden, insbesondere Säcken in einer einzigen Füllstation mit Schüttgut zu schaffen, durch die die Befüllung zeitlich verkürzt wird, ohne daß die Genauigkeit beeinträchtigt wird. Insbesondere soll ein Verfahren und eine Vorrichtung der genannten Art geschaffen werden, die vollständig automatisiert und auch zentral gesteuert werden können. Außerdem soll auch ein Verfahren und eine Vorrichtung geschaffen werden, bei denen Veränderungen beim Befüllvorgang z.B. infolge Eigenschaftsänderungen des Schüttguts sogleich festgestellt und kompensiert werden können. Weitere Vorteile der Erfindung ergeben sich aus der folgenden Beschreibung.

Diese Aufgabe wird bei dem eingangs genannten Verfahren erfindungsgemäß dadurch gelöst, daß man das Gewicht oder Volumen der ersten Menge außerhalb des Gebindes durch eine erste Messung feststellt und das Gebinde mit dieser ersten Menge befüllt und das Gebinde mit der zweiten Menge befüllt, diese Menge einer Wägung unterzieht und das Gewicht und/oder den Zeitpunkt des Befüllbeginns und/oder die Befüllgeschwindigkeit der zweiten Menge unter Benutzung der Ergebnisse der ersten Messung oder der Messungen voraufgegangener Befüllzyklen einstellt. Die Hauptmenge des Sollgewichts, z.B. 80 bis 95 % davon werden außerhalb des Gebindes verwogen und als Grobstrom, d.h. mit hoher Befüllgeschwindigkeit in das Gebinde eingeführt. Die zweite, wesentlich kleinere Menge von z.B. 5 bis 20 % des Sollgewichts wird getrennt von der ersten Messung als Feinstrom in das Gebinde eingebracht und verwogen, wobei die Reihenfolge dieser Einbringung und Wägung beliebig sein kann. Durch dieses Verfahren, insbesondere seine getrennten Wägungen der beiden Mengen steht das Meßergebnis der ersten Wägung schnell zur Verfügung. Es kann daher frühzeitig in einem Rechner verarbeitet und dazu benutzt werden, die Befüllung mit der zweiten Menge zu optimieren. Eine solche Optimierung kann durch eine Veränderung der zeitlichen Überlappung beider Befüllungen oder der Befüllgeschwindigkeit der zweiten Menge erreicht werden.

Bei einer Ausführungsform des erfindungsgemäßen Verfahrens verwiegt man bei der zweiten Wägung die zweite Menge zusammen mit der ersten Menge in dem Gebinde. In diesem Falle befindet sich das Gebinde in der Füllstation auf einer Waage, d.h die Förderkette für die Gebinde ist in der Füllstation durch eine Waage unterbrochen. Vorzugsweise spannt man dann bei der zweiten Wägung die Waage auf das Gewicht der ersten Menge vor und arretiert sie und gibt sie erst nach der Befüllung des Gebindes mit der ersten Menge wieder frei. Dies erlaubt die Befüllung mit hoher Geschwindigkeit und gleichzeitiger Verdichtung des Schüttgutes, ohne daß die Waage anschließend stark schwingt, wodurch die zweite Wägung behindert und zu einem fehlerhaften Ergebnis führen würde. Zweckmäßigerweise berücksichtigt man beim Dosieren der zweiten Menge die Nachlaufrate des Feinstroms durch entsprechend vorzeitiges Beenden desselben. Die von der Dosiergeschwindigkeit und den Schüttguteigenschaften abhängige Nachlaufrate kann aus vorherigen Messungen ermittelt und die Feinstromabschaltung entsprechend eingestellt werden.

Bei einer bevorzugten Ausführungsform des erfindungsgemäßen Verfahrens wiegt man bei der zweiten Wägung die zweite Menge aus einer Vorratsmenge aus. In diesem Falle ist die Förderkette an der Füllstation nicht durch eine Waage unterbrochen. Die zweite Menge ergibt sich aus der Gewichtsdifferenz der Vorratsmenge vor und nach der Dosierung eines Teils davon in das Gebinde und kann so sehr genau bemessen werden. Bei dieser Ausführungsform des Verfahrens kann man am Ende der Befüllung des Gebindes mit der ersten Menge aus den dann aus beiden Wägungen vorliegenden Gewichten die Restlaufzeit der weiteren Befüllung mit der zweiten Menge optimieren. Diese Optimierung kann sowohl die Einstellung bzw. Neueinstellung der Überlappungszeit der beiden Befüllvorgänge als auch die Dosiergeschwindigkeit, d.h. die Befüllungsgeschwindigkeit der zweiten Menge beinhalten. So kann man das Abschaltgewicht bei der zweiten Wägung aus den bei beiden Wägungen vor den Befüllungen gemessenen Gewichten berechnen und unter Benutzung der bei der ersten Wägung gemessenen Gewichte vor und nach der Befüllung korrigieren. Diese Korrektur berücksichtigt die Fehlbefüllung, wenn die bereitgestellte erste Menge nicht vollständig in das Gebinde gelangt, sondern z.B. zum Teil in dem Bereitstellungsraum zurückbleibt und dadurch die erste Befüllmenge tatsächlich zu gering ist.

Bei einer weiteren Ausführungsform des Verfahrens kann die erste Menge aus mehreren Teilmengen unterschiedlicher Schüttgüter zusammengesetzt sein. In diesem Fall wird das Gebinde mit einem Schüttgutgemisch befüllt. Dabei umfaßt die erste Wägung mehrere aufeinander folgende Teilwägungen der aus getrennten Quellen in den Bereitstellungsraum einlaufenden Schüttgüter, wobei über die Teilwägungen die Anteile der Schüttgüter gesteuert werden können. Im allgemeinen werden die Teilmengen nacheinander bereitgestellt und wird das Gebinde mit diesen Teilmengen befüllt. Die Teilmengen befinden sich dabei in separaten Bereitstellungsräumen, aus denen sie getrennt in das Gebinde einlaufen. Es ist auch möglich, die Teilmengen zunächst in demselben Bereitstellungsraum zusammenzuführen und dann in einem Zuge in das Gebinde einlaufen zu lassen.

Bei einer bevorzugten Ausführungsform des erfindungsgemäßen Verfahrens beginnt man mit der Befüllung des Gebindes mit der zweiten Menge, bevor die Befüllung mit der ersten Menge beendet ist. Diese zeitliche Überlappung der beiden Befüllungen erlaubt eine Verkürzung der gesamten Befüllzeit, ohne daß die Genauigkeit am Ende dadurch beeinträchtigt wird, da das Endgewicht nur durch den Feinstrom alleine erreicht wird. Im allgemeinen beginnt man die Befüllung mit der ersten Menge vor der Beendigung der ersten Wägung und/oder beendet sie nach der Beendigung der ersten Wägung. Befüllungszeit und Zeitraum der ersten Wägung überdecken sich teilweise, so daß das Wägeresultat zur Verfügung steht, während der Grobstrom noch läuft.

Zweckmäßigerweise berechnet man aus vorhergehenden Befüllungszyklen einen Mittelwert für die Befüllungsdauer mit der zweiten Menge und stellt aufgrund dieses Mittelwerts eine zeitliche Überlappung der Befüllungen mit den beiden Mengen, d.h. den Beginn der Befüllung mit der zweiten Menge ein. Da sich das Füllverhalten eines Schüttguts in den seltensten Fällen sprunghaft ändert, kann aus dem Füllverhalten bei den vorhergehenden Zyklen auf das Verhalten bei dem laufenden Zyklus geschlossen werden. Der genannte Mittelwert steht damit für die Steuerung und Optimierung der zweiten (Feinstrom)menge zur Verfügung, bevor der Meßwert aus der ersten Wägung des laufenden Zyklus vorliegt. Der Beginn der Befüllung mit der zweiten Menge kann daher frühzeitig vor dem Auslaufen der Befüllung mit der ersten Menge beginnen. Da der Mittelwert immer aus den letzten Befüllungszyklen resultiert, kann die Überlappung modifiziert werden, wenn sich in den Befüllungszyklen ein Gang, d.h. eine nicht zufällige Veränderung in einer Richtung zeigt.

Die Aufgabe wird ferner bei der eingangs genannten Vorrichtung erfindungsgemäß dadurch gelöst, daß die Füllstation mindestens einen ersten, je ein Mengenmeßgerät und den Behälter enthaltenden Beschickungsstrang für die erste Menge sowie mindestens einen zweiten Beschickungsstrang mit je einem Behälter und einer Waage für die zweite(n) Menge(n) umfaßt und in den beiden Beschikkungssträngen Stellglieder angeordnet sind. Das Mengenmeßgerät ist vorzugsweise eine Waage oder ein Volumenmeßgerät, z.B. ein Behälter mit Füllstandsmessung. Die Stellglieder dienen insbesondere zur Durchlaufsperre und -freigabe des Schüttguts. Bei mehreren zweiten Beschickungssträngen dienen die durch sie laufenden Feinströme der Einstellung der genauen Mengenverhältnisse der verschiedenen, durch die ersten Beschickungsstränge dem Gebinde zugeführten Schüttgüter. Die erfindungsgemäße Vorrichtung hat somit bei einfachster Ausführung zwei parallel geschaltete Beschickungsstränge zum Gebinde für die große erste Menge bzw. die kleine zweite Menge. Beide Beschickungsstränge sind jeweils mit Behältern zur Bereitstellung des Schüttguts und Stellgliedern für die Durchlaufsteuerung durch beide Stränge ausgestattet. Während der Beschickungsstrang für die erste Menge eine Waage enthalten muß, ist dies bei dem zweiten Strang wahlweise möglich. Je nach Ausführung kann die zweite Waage in dem zweiten Beschickungsstrang oder in der Gebindeförderkette unter dem Füllstutzen angeordnet sein.

Bei der zuerst genannten Ausführungsform der Vorrichtung ist der zweite Behälter mit der Dosiereinheit auf der zweiten Waage angeordnet. Bei dieser Konstruktion ist die größte Wiegegenauigkeit erreichbar, weil der aus der Gewichtsmessung der ersten Menge resultierende Vorgabewert für die zweite Menge an der zweiten Waage direkt gemessen wird. Da das Gebinde in der Füllstation nicht gewogen wird, kann während des gesamten Füllvorgangs das Schüttgut im Gebinde verdichtet werden. Außerdem kann in der Füllstation die aktive Entlüftung des Gebindes und des Schüttguts vor dem Befüllen beginnen und darüber hinaus fortgesetzt werden, weil keine Wägung erfolgt, die dadurch beeinträchtigt werden könnte.

Bei der anderen Ausführungsform der erfindungsgemäßen Vorrichtung ist die von dem zweiten Behälter getrennte Waage für die Wägung des Gebindes eingerichtet. In diesem Falle ist die Förderkette für das Gebinde in der Füllstation durch eine Waage unterbrochen. Die Sackentlüftung erfolgt, solange die zweite Waage arretiert ist. Nach der Freigabe der zweiten Waage wird die aktive Entlüftung des Gebindes abgeschaltet.

Vorzugsweise sind die beiden Behälter an separate Ausläufe des gleichen Silos angeschlossen, so daß beide Beschickungsstränge unabhängig voneinander betrieben werden können.

Bei einer weiteren Ausführungsform der erfindungsgemäßen Vorrichtung sind der Füllstation weitere Behälter mit weiteren Waagen für weitere Schüttgüter zugeordnet. Anstelle des bisher beschriebenen einen Silos mit dem angeschlossenen ersten Beschickungsstrang hat diese Ausführungsform eine Mehrzahl von Silos mit einer Mehrzahl von angeschlossenen ersten Beschickungssträngen, so daß in derselben Gesamtanlage verschiedene Schüttgüter in dasselbe Gebinde oder in verschiedene Gebinde eingebracht werden können.

Zweckmäßigerweise umfaßt die erfindungsgemäße Vorrichtung Sensoren zur Durchflußkontrolle an dem Füllstutzen und/oder zur Anwesenheitskontrolle des Gebindes in der Füllposition. Diese Sensoren und ggfs. weitere Sensoren, z.B. zur Füllstandskontrolle des Silos sind für eine automatische Befüllung von Vorteil.

Bei der bevorzugten Ausführungsform der erfindungsgemäßen Vorrichtung sind die Waagen und die Stellglieder sowie die ggfs. vorhandenen Sensoren über Signal- bzw. Steuerleitungen mit wenigstens einem Rechner zusammengeschaltet. Dies erlaubt einen automatischen Ablauf der Befüllung. Der Rechner kann an einen Zentralrechner angeschlossen sein, von dem aus der Prozess durch Vorgabewerte gesteuert werden kann.

Die Erfindung wird nun an Hand der Zeichnung näher beschrieben. Es zeigen
Figur 1 eine erste Ausführungsform der Vorrichtung für die Befüllung von Säcken mit Schüttgut in schematischer Darstellung;
Figur 2 eine zweite Ausführungsform der Befüllungsvorrichtung in schematischer Darstellung;
Figur 3 eine dritte Ausführungsform der Befüllungsvorrichtung in vereinfachter schematischer Darstellung; und
Figur 4 eine Detaildarstellung einer vierten Ausführungsform der Befüllungsvorrichtung.

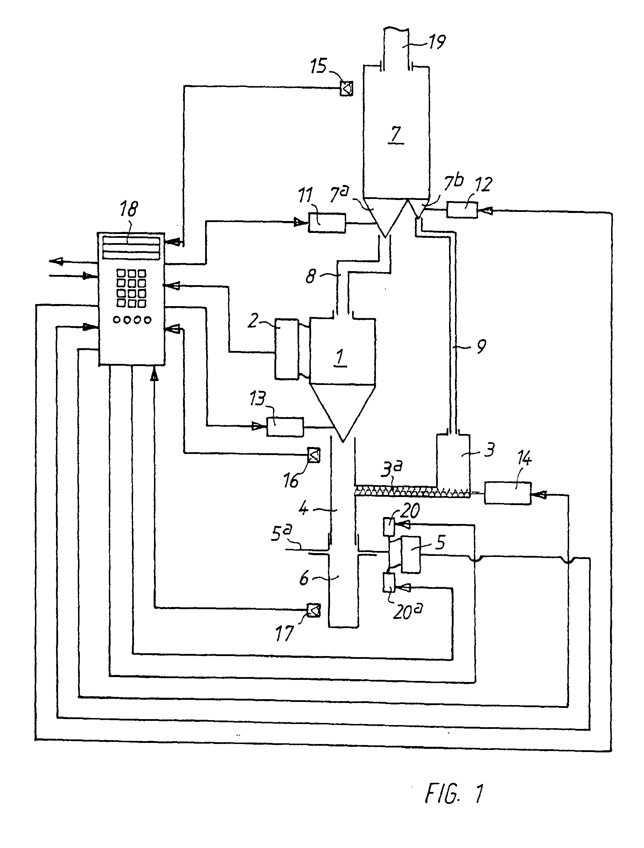

Die in Figur 1 gezeigte Ausführungsform der Vorrichtung umfaßt einen ersten Behälter 1, der mit einer ersten Waage 2 gekoppelt ist, einen zweiten Behälter 3 mit einer Dosierschnecke 3^{a}, einen Füllstutzen 4, in den die Ausläufe des ersten Behälters 1 und der Dosierschnecke 3^{a} münden, eine unter dem Füllstutzen 4 angeordnete zweite Waage 5 mit Sackhalterung 5^{a} für den zu befüllenden Sack 6 sowie ein Silo 7 mit zwei Auslauftrichtern 7^{a},7^{b}, an die der erste Behälter 1 über die Leitung 8 bzw. der zweite Behälter 3 über die Leitung 9 angeschlossen sind. Zum Öffnen und Schließen der Ausläufe 7^{a} und 7^{b} sind fernbedienbare Stellglieder 11 bzw. 12 vorgesehen. Zum Öfnen und Schließen des ersten Behälters 1 ist dieser mit einem fernbedienbaren Stellglied 13 bestückt. Zur Betätigung der Dosierschnecke 3^{a} ist diese mit einem Stellglied 14 gekoppelt. Ferner ist die Anlage mit Kontrollsensoren bestückt. So ist das Silo 7 mit einem Füllstandssensor 15, der Füllstutzen 4 mit einem Durchflußsensor 16 und die Füllposition unterhalb des Stutzens 4 mit einem Sensor 17 zur Anwesenheitskontrolle des Sackes 6 ausgerüstet. Die Waagen 2,5, die Stellglieder 11-14 und die Sensoren 15-17 sind über Signalleitungen bzw. Steuerleitungen mit einem Rechner 18 verbunden, der aufgrund der von den Waagen 2,5 und den Sensoren 15-17 kommenden Signale die Steuerbefehle an die Stellglieder 11-14 in der nötigen zeitlichen Abfolge für den Befüllzyklus gibt. Der Rechner 18 ist an einen Zentralrechner (Host) angeschlossen (nicht dargestellt), von dem der Rechner 18 Vorgabewerte erhält und an den er Auswertedaten sendet. Weitere Signalleitungen gehen von dem Rechner 18 an periphere Stellglieder für die Beschickung des Silos 7 aus einem Massestrom und für den Antrieb der Transportkette für den Sack 6 (nicht dargestellt).

Der Ablauf eines Befüllzyklus ist wie folgt: Das Silo 7 wird durch die Leitung 19 bis zu einem Füllstand gefüllt, der durch den Sensor 15 erfaßt wird. Das von dem Sensor 15 gelieferte Signal wird in dem Rechner 18 zur Absperrung des Beschickungsstroms durch die Leitung 19 benutzt. Die Waage 5 wird durch ein von dem Rechner 18 kommendes Signal vorbelastet und durch ein weiteres Signal von dem Rechner zeitverzögert arretiert (Stellglied 20). Diese Signale können Wege und/oder Drehwinkel steuern. Durch ein von dem Rechner 18 kommendes Signal wird das Stellglied 11 betätigt, so daß der Auslauf 7^{a} öffnet und der erste Behälter 1 mit Schüttgut beschickt wird. Die dem Behälter 1 zugeordnete Waage 2 meldet ihr Wiegeergebnis an den Rechner 18. Der Zeitpunkt, an dem der Auslauf 7^{a} geschlossen wird, wird von dem Rechner aus den Wiegeergebnissen laufend berechnet und an das Stellglied 11 übermittelt. Aus dem Silo 7 wird ferner durch einen von einem Stellglied 12 betätigten Auslauf 7^{b} über die Leitung 9 ein zweiter Behälter 3 mit Schüttgut beschickt. Über das von dem Rechner angesteuerte Stellglied 12 kann der Auslauf 7^{b} geschlossen werden, z.B. für eine Entleerung des Schüttgutpackers.

Der Behälter 1 ist nun mit einer vorgewählten Menge Schüttgut gefüllt, die z.B. 95% des abzufüllenden Sollgewichts beträgt. Liegt an dem Stutzen 4 gemäß Signal des Anwesenheitssensors 17 ein Sack 6 an, steuert der Rechner 18 das Stellglied 13 an, um den ersten Behälter 1 zu öffnen. Das Schüttgut fließt über den Trichter und den Stutzen 4 in den Sack. Der Durchflußsensor 16 meldet das Ende des Schüttgutstroms in dem Stutzen 4 an den Rechner. Daraufhin fragt der Rechner an der Waage 2 das Gewicht des Behälters 1 ab und bildet die Differenz zu dem zuvor gemeldeten Gewicht des gefüllten Behälters 1. Das Ergebnis wird als Vorgabe für das Stellglied 14 der Dosierschnecke 3^{a} benutzt. Durch das von dem Durchflußsensor 16 gelieferte Signal wird vom Rechner 18 der Schließbefehl an das Stellglied 13 und der Öffnungsbefehl an das Stellglied 11 ausgelöst, so daß noch während des laufenden Befüllzyklus der erste Behälter 1 für den nächsten Zyklus gefüllt wird. Außerdem gibt der Rechner 18 durch ein Signal an das Stellglied 20^{a} die Waage 5 frei.

Gleichzeitig oder verzögert zur Befüllung des Sackes mit Schüttgut aus dem Behälter 1 im Grobstrom beginnt die Befüllung aus dem zweiten Behälter 3 mittels der Dosierschnecke 3^{a}. Hierzu liefert der Rechner 18 ein Signal an das Stellglied 14 entsprechend einem Vorgabewert, der durch einen Mittelwert vorhergehender Füllvorgänge korrigiert werden kann. Nach der Freigabe der Waage 5 wird die aktive Entlüftung des Sackes 6 abgeschaltet, so daß eine genaue Wägung möglich wird. Aus den von der Waage 5 gelieferten Meßsignalen berechnet der Rechner den Abschaltzeitpunkt für den Dosierer 3^{a}. Der Rechner liefert dann ein entsprechendes Schaltsignal an das Stellglied 14 und verzögert dazu ein Signal an den Antrieb der Transportkette zwecks Einschaltung des Sacktransports. Sobald sich der nächste Sack 6 unter dem Füllstutzen 4 auf der Waage 5 befindet, beginnt der nächste Befüllungszyklus. Die Sensoren 15-17 können beispielsweise Photozellen, Ultraschallsensoren und im Falle des Sensors 17 auch ein Unterdrucksensor am Sackkragen sein.

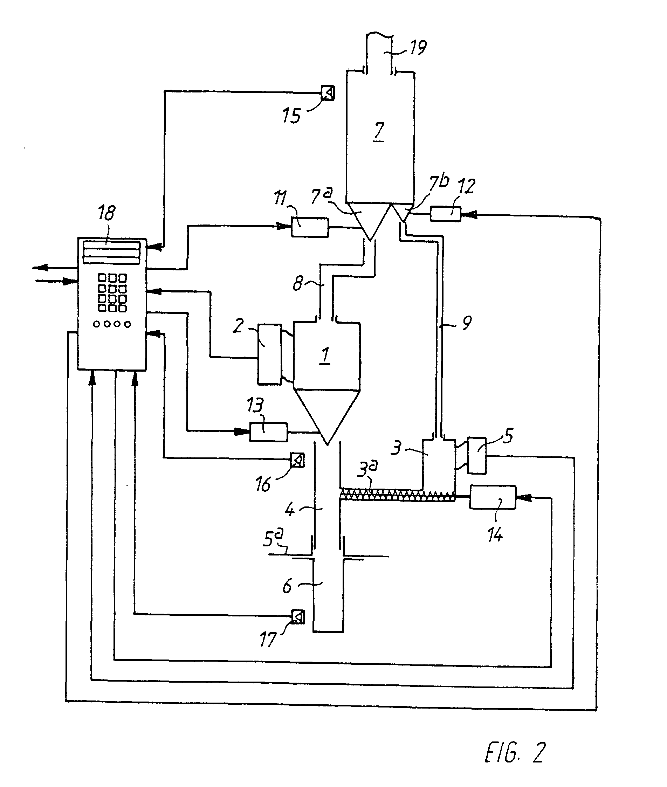

Die in Figur 2 gezeigte Vorrichtung benutzt für gleiche Komponenten die gleichen Bezugszahlen wie in Figur 1. Die gezeigte Vorrichtung unterscheidet sich von der nach Figur 1 im wesentlichen nur durch die Position der zweiten Waage 5. Während bei der Anlage nach Figur 1 die Waage 5 das aktuelle Gewicht des Sackes 6 beim Befüllvorgang mit dem Feinstrom mißt, ist die Waage 5 bei der Anlage der Figur 2 mit dem zweiten Behälter 3 und Dosierschnecke 3^{a} gekoppelt. Es wird daher deren Gewicht einschließlich der enthaltenen Schüttgutmenge gemessen. Die als Feinstrom in den Sack 6 überführte zweite Menge des Schüttguts wird daher durch die Waage 5 durch Auswägung ermittelt. Da die Arretierung und Entarretierung der Waage 5 hier entfällt, fehlen auch die bei der Anlage nach Figur .1 erforderlichen Stellglieder 20,20^{a}.

Für den Ablauf des Befüllzyklus gilt im wesentlichen das oben zu Figur 1 Gesagte. Abweichend wird jedoch nach dem von Sensor 16 gemeldeten Ende des Schüttgutdurchflusses durch den Stutzen 4 von dem Rechner 18 das Gewicht des Behälters 1 wie auch das Gewicht des Behälters 3,3^{a} abgefragt. In diesem Falle wird das Ergebnis der Rechnung als Vorgabewert für den Antrieb der Dosierschnecke 3^{a} durch entsprechende Signale an das Stellglied 14 benutzt. Die Signalgabe an die Waage 5 zwecks Arretierung und Entarretierung entfällt.

Wenn der von dem Rechner 18 aus den Gewichten des Behälters 1 und des Ausgangsgewichtes des Behälters 3,3^{a} berechnete Vorgabewert an der Waage 5 erreicht ist, liefert der Rechner den Abschaltbefehl an das Stellglied 14. Der Sacktransport wird zeitverzögert eingeschaltet. Bei diesem Verfahren ist die größere Wiegegenauigkeit erreichbar, weil der nach dem Ende der Sackbefüllung mit der ersten Menge ermittelte Vorgabewert zum Abschalten des Feinstroms an der Waage 5 direkt gemessen wird. Während des gesamten Befüllvorgangs kann das Schüttgut im Sack verdichtet werden. Die aktive Entlüftung des Sackes und des Schüttgutes kann vor dem Befüllen beginnen und darüber hinaus fortgesetzt werden, da der Sack während der Befüllung nicht gewogen wird.

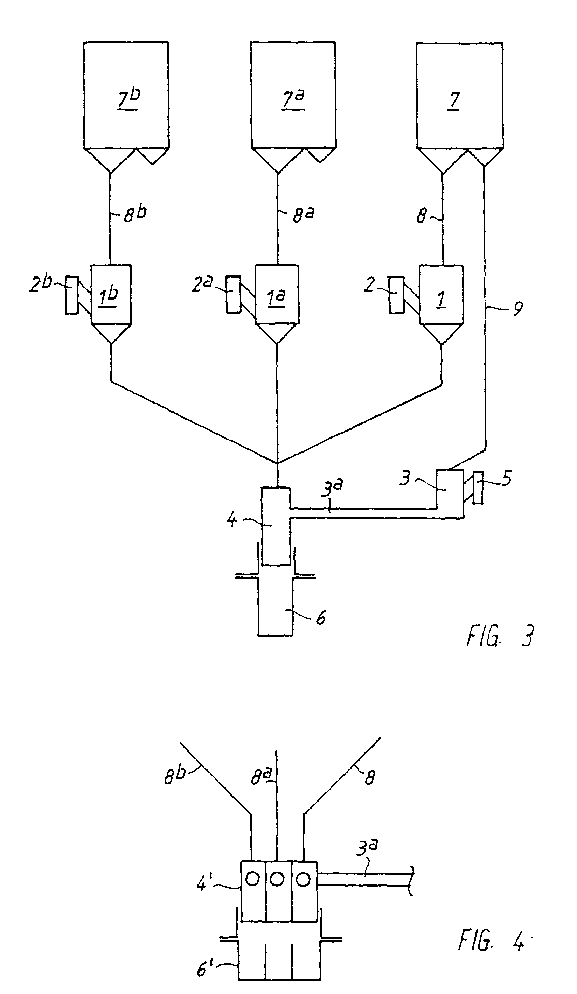

Die in Figur 3 gezeigte Anlage unterscheidet sich nur dadurch von der Anlage nach Figur 2, daß zusätzlich zwei weitere Silos 7^{a}, 7^{b}, zwei weitere, über Leitungen 8^{a},8^{b} daran angeschlossene Wägebehälter 1^{a},1^{b} mit Waagen 2^{a},2^{b} vorgesehen sind. In dieser Anlage kann der Sack 6 mit drei verschiedenen Schüttgütern in einem gewünschten einstellbaren Gewichtsverhältnis befüllt werden. Die Versorgungsleitung 9 für den Feinstromgenerator 3,3^{a},5 kann an einen beliebigen der drei Silos 7,7^{a},7^{b} angeschlossen werden.

Figur 4 zeigt eine gegenüber Figur 3 modifizierte Einrichtung, durch die die drei Schüttgüter getrennt in ein Gebinde 6' (z.B. Karton) eingeführt werden und dort auch getrennt bleiben. Der Befüllstutzen 4' hat drei separate Befüllkanäle, an die die Schüttgutleitungen 8, 8^{a} und 8^{b} angeschlossen sind. Dabei ist vorgesehen, daß die Feinstrom-Dosierschnecke 3^{a} an einen beliebigen der drei Befüllkanäle des Stutzens 4' angeschlossen werden kann entsprechend der oben erwähnten Möglichkeit des Anschlusses der Versorgungsleitung 9 an ein beliebiges der drei Silos 7,7^{a},7^{b}.

## Patentansprüche

1. Verfahren zum Befüllen von Gebinden, insbesondere Säcken in einer Füllstation mit Schüttgut, von dem eine erste Menge im Grobstrom und eine zweite Menge im Feinstrom in das Gebinde mittels Befüllzyklen eingebracht werden, um das Füllgewicht zu ergeben, **dadurch gekennzeichnet, daß** man das Gewicht oder Volumen der ersten Menge außerhalb des Gebindes durch eine erste Messung feststellt und das Gebinde mit dieser ersten Menge befüllt und das Gebinde mit der zweiten Menge befüllt, diese Menge einer Wägung unterzieht und das Gewicht und den Zeitpunkt des Befüllbeginns und/oder die Befüllungsgeschwindigkeit der zweiten Menge unter Benutzung der Ergebnisse der ersten Messung voraufgegangener Befüllzyklen einstellt.

2. Verfahren nach Anspruch 1, **dadurch gekennzeichnet, daß** man bei der zweiten Wägung die zweite Menge zusammen mit der ersten Menge in dem Gebinde verwiegt.

3. Verfahren nach Anspruch 2, **dadurch gekennzeichnet, daß** man bei der zweiten Wägung die Waage auf das Gewicht der ersten Menge vorspannt und arretiert und erst nach der Befüllung des Gebindes mit der ersten Menge wieder freigibt.

4. Verfahren nach einem der Ansprüche 2 oder 3, **dadurch gekennzeichnet, daß** man beim Dosieren der zweiten Menge die Nachlaufrate des Feinstroms durch entsprechend vorzeitiges Beenden desselben berücksichtigt.

5. Verfahren nach Anspruch 1, **dadurch gekennzeichnet, daß** man bei der zweiten Wägung die zweite Menge aus einer Vorratsmenge auswiegt.

6. Verfahren nach Anspruch 5, **dadurch gekennzeichnet, daß** man am Ende der Befüllung des Gebindes mit der ersten Menge aus den dann aus beiden Wägungen vorliegenden Gewichten die Restlaufzeit der weiteren Befüllung mit der zweiten Menge optimiert.

7. Verfahren nach Anspruch 5 oder 6, **dadurch gekennzeichnet, daß** man das Abschaltgewicht der zweiten Wägung aus den bei beiden Wägungen vor den Befüllungen gemessenen Gewichten berechnet und unter Benutzung der bei der ersten Wägung gemessenen Gewichte vor und nach der Befüllung korrigiert.

8. Verfahren nach einem der Ansprüche 1 bis 7, **dadurch gekennzeichnet, daß** man die erste Menge aus mehreren Teilmengen unterschiedlicher Schüttgüter zusammensetzt.

9. Verfahren nach Anspruch 8, **dadurch gekennzeichnet, daß** man die Teilmengen nacheinander bereitstellt und das Gebinde mit ihnen befüllt.

10. Verfahren nach einem der Ansprüche 1 bis 9, **dadurch gekennzeichnet, daß** man mit der Befüllung des Gebindes mit der zweiten Menge beginnt, bevor die Befüllung mit der ersten Menge beendet ist.

11. Verfahren nach einem der Ansprüche 1 bis 10, **dadurch gekennzeichnet, daß** man die Befüllung mit der ersten Menge vor der Beendigung der ersten Wägung beginnt und/oder bei oder nach der Beendigung der ersten Mengenmessung oder Wägung beendet.

12. Verfahren nach einem der Ansprüche 1 bis 11, **dadurch gekennzeichnet, daß** man aus vorhergehenden Befüllungszyklen einen Mittelwert für die Befüllungszeit der zweiten Menge berechnet und aufgrund dieses Mittelwerts den Beginn der Befüllung mit der zweiten Menge einstellt.

13. Vorrichtung zur Befüllung von Gebinden, gemäß des Verfahrens aus Anspruch 1, insbesondere von Säcken mit Schüttgut, mit einer Füllstation, der ein erstes Mengenmeßgerät (2) und ein erster Behälter (1) zugeordnet sind, an dessen Auslauf ein Füllstutzen (4) angeschlossen ist, **dadurch gekennzeichnet, daß** die Füllstation mindestens einen ersten, je ein Mengenmeßgerät (2) und den Behälter (1) enthaltenden Beschickungsstrang für die erste Menge sowie mindestens einen zweiten Beschickungsstrang mit je einem Behälter (3) und einer Waage (5) für die zweite Menge umfaßt und in den beiden Beschickungssträngen Stellglieder (11, 13 bzw. 12, 14) angeordnet sind und über Signal- bzw. Steuerleitung mit wenigstens einem Rechner (18) zusammengeschaltet sind, wobei die zweite Menge in Abhängigkeit der Messungen vorangegangenen Befüllzyklen eingestellt wird.

14. Vorrichtung nach Anspruch 13, **dadurch gekennzeichnet, daß** der zweite Behälter (3) zusammen mit einer Dosiereinheit (3^{a}) auf der zweiten Waage (5) angeordnet ist.

15. Vorrichtung nach Anspruch 13 oder 14, **dadurch gekennzeichnet, daß** die von dem zweiten Behälter (3) getrennte zweite Waage (5) für die Wägung des Gebindes (6) eingerichtet ist.

16. Vorrichtung nach einem der Ansprüche 13 bis 15, **dadurch gekennzeichnet, daß** die beiden Behälter (1,3) an separate Ausläufe (7^{a}, 7^{b}) des gleichen Silos (7) angeschlossen sind.

17. Vorrichtung nach einem der Ansprüche 13 bis 16, **dadurch gekennzeichnet, dass** der Füllstation weitere Behälter (1^{a}, 1^{b}) auf weiteren Waagen (2^{a}, 2^{b}) für weitere Schüttgüter zugeordnet sind.

18. Vorrichtung nach einem der Ansprüche 13 bis 17, **gekennzeichnet durch** Sensor(en) (16, 17) zur Durchflußkontrolle an dem Füllstutzen (4) und/oder zur Anwesenheitskontrolle des Gebindes (6) in der Füllposition.

19. Vorrichtung nach einem der Ansprüche 13 bis 18, **dadurch gekennzeichnet, daß** der Füllstutzen (4') mehrere separate Befüllkanäle enthält, an die die Schüttgutleitungen (8, 8^{a}, 8^{b}) der ersten Beschickungsstränge angeschlossen sind.

## Claims

1. A process for filling containers, in particular sacks, with loose material in a filling station, a first amount of which is introduced in a coarse flow and a second amount is introduced in a fine flow into the container so as to result in the filling weight, **characterised in that** the weight or volume of the first amount outside the container is established by a first measurement, and the container is filled with this first amount, and the container is filled with the second amount, this amount being subjected to a weighing, and the weight and the moment of filling and/or the speed of filling of the second amount are adjusted using the results of the first measurement of the preceding filling cycle.

2. A process according to claim 1, **characterised in that** in the second weighing, the second amount is weighed together with the first amount in the container.

3. A process according to claim 2, **characterised in that** in the second weighing, the scales are pre-loaded and stopped at the weight of the first amount, and are released again only after filling the container with the first amount.

4. A process according to any of claims 2 or 3, **characterised in that** in dosing the second amount, the run-out rate of the fine flow due to corresponding premature ending of same is taken into consideration.

5. A process according to claim 1, **characterised in that** in the second weighing, the second amount is weighed from a storage amount.

6. A process according to claim 5, **characterised in that** at the end of filling the container with the first amount, then from the weight present from the two weighings, the remaining running time of further filling is optimised by the second amount.

7. A process according to claims 5 or 6, **characterised in that** the switch-off weight of the second weighing is calculated from the weight measured from both weighings before the filling, and it can be corrected before and after filling by using the weight measured at the first weighing.

8. A process according to any of claims 1-7, **characterised in that** the first amount is compiled from a plurality of part-amounts of differing loose material.

9. A process according to claim 8, **characterised in that** the part-amounts are prepared one after another and the container is filled with them.

10. A process according to any of claims 1-9, **characterised in that** filling of the container with the second amount begins before filling with the first amount has ended.

11. A process according to any of claims 1-10, **characterised in that** filling with the first amount begins before completion of the first weighing and/or ends with or after completion of the measurement or weighing of the first amount.

12. A process according to any of claims 1-11, **characterised in that** a mean value is calculated for the filling time of the second amount from previous filling cycles and, on the basis of this mean value, the start of filling with the second amount is set.

13. A device for filling containers, in particular sacks, with loose material, which is associated with a first amount-measuring device (2) and a first container (1), to whose outlet a connecting piece is attached, **characterised in that** the filling station encompasses at least a first feeding line, each containing an amount-measuring device (2) and a container (1) for the first amount likewise at least a second feeding line, each encompassing a container (3) and a scales (5) for the second amount, and servo components (11,13 or 12,14) are arranged in the two feeding lines and are connected together via signal-or-control line with at least one computer (18), and where the second amount is adjusted in dependence with the measurements of preceding filling cycle.

14. A device according to claim 13, **characterised in that** the second container (3) is arranged together with a dosing unit (3^{a}) on the second scales (5).

15. A device according to claim 13 or 14, **characterised in that** the second scales (5) separated from the second container (3) are installed for weighing the container (6).

16. A device according to any of claims 13-15, **characterised in that** the two containers (1,3) are attached to separate outlets (7^{a},7^{b}) of the same storage bin (7).

17. A device according to any of claims 13-16,**characterised in that** further containers (1^{a},1^{b}) on further scales (2^{a},2^{b}) for further loose material are allocated to the filling station.

18. A device according to any of claims 13-17, **characterised by** sensor(s) (16,17) for flow control to connecting piece (4) and/or for control of the presence of container (6) in the filling position.

19. A device according to any of claims 13-18, **characterised in that** connecting piece (4) contains a plurality of separate filling channels, to which loose material lines (8,8^{a},8^{b}) of the first feeding lines are connected.

## Revendications

1. Procédé pour le remplissage d'emballages, en particulier de sacs sur un poste de remplissage avec un produit en vrac dont une première quantité est introduite dans l'emballage en flux brut et une deuxième quantité en flux fin afin de constituer le poids de remplissage, **caractérisé en ce que** le poids ou le volume de la première quantité est déterminé à l'extérieur de l'emballage par une première mesure, que l'emballage est rempli de cette première quantité et de la deuxième quantité, que l'on soumet cette quantité à une pesée et que le poids et le moment du début du remplissage et / ou la vitesse de remplissage de la deuxième quantité est réglé(e) en utilisant les résultats des cycles de remplissage ayant précédé la première mesure.

2. Procédé selon revendication 1, **caractérisé en ce que**, lors de la deuxième pesée, on pèse la deuxième quantité avec la première quantité dans l'emballage.

3. Procédé selon revendication 2, **caractérisé en ce que**, lors de la deuxième pesée, on précharge et arrête la balance au poids de la première quantité pour ne la libérer qu'après le remplissage de l'emballage avec la première quantité.

4. Procédé selon une des revendications 2 ou 3, **caractérisé en ce que**, lors du dosage de la deuxième quantité, on tient compte du taux de poursuite du flux fin en le terminant en temps voulu.

5. Procédé selon revendication 1, **caractérisé en ce que**, lors de la deuxième pesée, on prélève la deuxième quantité par pesée à partir d'une quantité de réserve.

6. Procédé selon revendication 5, **caractérisé en ce que**, à la fin du remplissage de l'emballage avec la première quantité, on optimise la durée restante de la suite du remplissage avec la deuxième quantité en partant des poids disponibles des deux pesées.

7. Procédé selon revendication 5 ou 6, **caractérisé en ce que** l'on calcule le poids de coupure de la deuxième pesée à partir des poids mesurés lors des deux pesées avant le remplissage et que l'on corrige en utilisant les poids mesurés lors de la première pesée avant et après le remplissage.

8. Procédé selon une des revendications 1 à 7, **caractérisé en ce que** l'on compose la première quantité de plusieurs quantités partielles de différents produits en vrac.

9. Procédé selon revendication 8, **caractérisé en ce que** l'on dispose les quantités partielles les unes après les autres pour en remplir l'emballage.

10. Procédé selon une des revendications 1 à 9, **caractérisé en ce que** l'on commence le remplissage de l'emballage avec la deuxième quantité avant la fin du remplissage de la première quantité.

11. Procédé selon une des revendications 1 à 10, **caractérisé en ce que** l'on commence le remplissage de la première quantité avant la fin de la première pesée et / ou qu'on le termine lors de ou après la fin de la première mesure de quantité ou pesée.

12. Procédé selon une des revendications 1 à 11, **caractérisé en ce que** l'on calcule des cycles de remplissage précédents une valeur moyenne pour le temps de remplissage de la deuxième quantité et que, sur la base de cette valeur moyenne, on règle le début du remplissage de la deuxième quantité.

13. Dispositif pour le remplissage d'emballages, en particulier de sacs, avec un produit en vrac, avec un poste de remplissage auquel sont associés un premier dispositif de mesure de quantité (2) et un premier récipient (1) à la sortie duquel est raccordé un manchon de remplissage (4), **caractérisé en ce que** le poste de remplissage comprend au moins une première branche de chargement comprenant au moins un dispositif de mesure de quantité (2) et le récipient (1) pour la première quantité ainsi qu'au moins une deuxième branche de chargement comprenant un récipient (3) et une balance (5) pour la deuxième quantité et qu'aux deux branches de chargement sont disposés des actionneurs (11, 13 et 12, 14) reliés par une ligne de signalisation et de commande à au moins un calculateur (18), la deuxième quantité étant réglée en fonction des mesures des cycles de remplissage précédents.

14. Dispositif selon revendication 13, **caractérisé en ce que** le deuxième récipient (3) est disposé avec un dispositif de dosage (3^{a}) sur la deuxième balance (5).

15. Dispositif selon revendication 13 ou 14, **caractérisé en ce que** la balance (5) séparée du deuxième récipient (3) est prévue pour la pesée de l'emballage (6).

16. Dispositif selon une des revendications 13 à 15, **caractérisé en ce que** les deux récipients (1, 3) sont raccordés à des sorties séparées (7^{a}, 7^{b}) de la même trémie (7).

17. Dispositif selon une des revendications 13 à 16, **caractérisé en ce que** d'autres récipients (1^{a}, 1^{b}) sont attribués à d'autres balances (2^{a}, 2^{b}) pour d'autres produits en vrac.

18. Dispositif selon une des revendications 13 à 17, **caractérisé par** un (des) capteur(s) (16, 17) pour le contrôle du débit au manchon de remplissage (4) et /ou pour le contrôle de présence de l'emballage (6) en position de remplissage.

19. Dispositif selon une des revendications 13 à 18, **caractérisé en ce que** le manchon de remplissage (4') comprend plusieurs canaux de remplissage séparés raccordés aux lignes de produit en vrac (8, 8^{a}, 8^{b}) des premières branches de chargement.
